# EUROPEAN PATENT SPECIFICATION

(11) **EP 1 865 766 B1**
(45) Date of publication and mention of the grant of the patent: **30.07.2008**
(21) Application number: 06716689.2
(22) Date of filing: 16.03.2006
(51) Int. Cl.: A01K 31/16

(54) **LAYING NEST FOR POULTRY**
LEGENEST FÜR GEFLÜGEL
NID DE PONTE POUR VOLAILLE

(30) Priority: 21.03.2005 NL 1028582
(43) Date of publication of application: 19.12.2007
(73) Proprietor: A.H. Jansen Holding B.V., 3772 MC Barneveld (NL)
(72) Inventor: RIJKSEN, Rijk, 8075 PH Elspeet (NL)
(74) Representative: Langenhuijsen, Bastiaan Wilhelmus Herman
(86) International application number: PCT/NL2006/050056
(87) International publication number: WO 2006/118453

(56) References cited:
- FR-A- 2 365 951
- US-A- 1 394 485
- US-A- 1 396 407
- US-A- 3 234 909
- US-A- 5 222 459
- US-B1- 6 394 031

## Description

The invention relates to a laying nest for poultry. The invention also relates to a device for keeping poultry, which device is provided with at least one laying nest according to the invention. The invention also relates to a method for keeping poultry by making use of a laying nest according to the invention.

Laying nests have been used for a long time in the poultry industry for the purpose of providing a space to which laying hens can withdraw in order to lay eggs. Such laying nests are generally arranged in poultry houses in which the poultry can usually move freely. A plurality of laying nests is generally applied in a poultry house and are usually positioned in successive rows, wherein a conveyor belt for eggs is situated along a (rear) side of the laying nests for discharge of eggs produced by the laying hens in me laying nests. A floor element of each laying nest here generally slopes slightly downward in the direction of the conveyor belt, whereby eggs laid in the laying nest will generally roll to the conveyor belt as a result of the force of gravity. It is generally deemed of great importance that poultry present in the laying nests, in particular the poultry that has already laid an egg, is periodically removed from the laying nests to make the laying nests free for subsequent use. Displaceable ejecting flaps are therefore usually applied to drive the poultry out of the laying nest. The known laying nest has multiple drawbacks. A significant drawback of the known laying nest is that during use of the laying nest by the poultry a considerable accumulation of fouling residues, such as faeces and feathers, will generally occur, these fouling residues generally being awkward and difficult to remove.

The invention has for its object to provide an improved laying nest which can be cleaned relatively simply and efficiently.

The invention provides for this purpose a laying nest of the type stated in the preamble, comprising: a housing for the poultry, which housing comprises an entrance for the poultry, at least one at least partially flexible screening element adapted to enable at least partial screening of the entrance, and at least one pivotable floor element; and drive means coupled to the housing for displacing the screening element and for pivoting the floor element between an accessible position, in which the screening element at least partially screens the entrance and the floor element is adapted to support poultry present in the laying nest, and an inaccessible position in which the screening element leaves the entrance substantially clear and the floor element substantially closes the entrance. By pivoting the (fouled) floor element in upward direction into the inaccessible position of the laying nest, whereby the entrance to the housing is substantially blocked, loose-lying fouling residues will be removed from the floor element as a result of the force of gravity. Fouling residues adhering to the floor element will here generally be at least substantially removed by allowing the poultry to pick at the floor element. In this way the floor element can thus be cleaned relatively efficiently in relatively natural and effective manner. In order to maximize the area of the floor element to be effectively picked by the poultry, the screening element will be displaced by the drive means. The at least partially, and preferably substantially, flexible screening element will, in the accessible position, partially screen the entrance to the housing of the laying nest in order to provide the poultry located in the laying nest with a certain sense of security, which on the one hand enhances the animal welfare, but which on the other hand makes collective laying of eggs in the laying nests relatively attractive. The screening element will here generally be formed by one or more substantially closed, solid and thereby substantially opaque material layers (flaps) to enable increased comfort of the laying nest for the poultry. The screening element is preferably manufactured from plastic, since plastic is relatively inexpensive, relatively durable and can be processed relatively simply into a flexible screening element. The drive means can be manually driven, but will generally be coupled to a motor, in particular an electric motor. The drive means can be adapted to enable fully independent and autonomous displacement of the floor element on the one hand and the flexible screening element on the other. The drive means are however preferably adapted for optionally simultaneous displacement of both the screening element and the floor element, whereby displacement of the floor element and displacement of the screening, element are mutually coupled, this usually being advantageous from a logistical and structural viewpoint. In addition to allowing efficient cleaning of the laying nest in natural and effective manner, in particular the floor element of the laying nest, by the poultry itself the displaceability of the floor element also has another important advantage. By pivoting the floor element in upward direction the floor element also functions as ejecting flap for periodic removal of the poultry from the laying nests, whereby a separate ejecting provision is no longer required.

By giving the screening element an at least partially flexible form the poultry can gain access to the laying nest relatively easily, and the poultry can leave the laying nest relatively easily. Due to the use of the flexibly embodied screening element the poultry will moreover not be injured by the screening element. In a preferred embodiment the drive means comprise at least one axially rotatable shaft for winding up (rolling up) at least a part of the screening element It is also possible to envisage displacing the screening element in a manner other than by winding up, for instance by lifting or folding up the screening element, or at least a part thereof. In a preferred embodiment the drive means comprise at least one axially rotatable shaft for winding up lifting means connected to the floor element. In this manner the floor element can be pivoted relatively easily in upward and downward direction. The axially rotatable shaft can also be adapted here to wind up the screening element in at least partially flexible form. It is also possible to envisage applying a plurality of axially rotatable shafts, wherein for instance a first shaft is adapted to wind up the screening element and a second shaft is adapted to wind up the lifting means. Although such an embodiment variant is usually less advantageous from an economic viewpoint, such a variant can nevertheless be applied in advantageous manner in the case autonomous driving of the floor element and the screening element is desired. In a particular preferred embodiment the axially rotatable shaft is positioned in, or at least close to, a plane defined by the entrance. The rotatable shaft is herein more preferably positioned substantially above the entrance in order to enable relatively quick and easy pivoting of the floor element in an upward direction. It will be apparent that numerous other constructions are possible for displacing the floor element between the accessible position of the laying nest and the inaccessible position of the laying nest. The lifting means can be of very diverse nature. The lifting means preferably comprise a flexible rear wall of the housing. Axial rotation of the shaft herein results in the rear wall being rolled up around the shaft, and thereby in the floor element being lifted, in order to allow the floor element to be picked by poultry foraging outside the laying nest. The flexible rear wall is here preferably manufactured from plastic. In an alternative preferred embodiment the lifting means comprise at least one cord which can be wound up around the shaft. Simultaneous lifting of the rear wall and floor element has the advantage that the size of a passage for eggs formed between the rear wall and the floor element is retained, whereby poultry cannot become trapped in this passage. Poultry being trapped in a passage for eggs which becomes smaller during the lifting of the floor element will in fact generally result in (serious) injury, paralysis and even death of the poultry. The passage for eggs is here preferably positioned on a side of the laying nest remote from the entrance, this generally being advantageous from a practical and structural viewpoint since the poultry does not then have to pass through the passage for eggs when entering or leaving the laying nest, whereby the chance of damage to the eggs is minimized. Furthermore, no specific structural provisions need thus be made to prevent damage to the laid eggs.

As will be apparent from the foregoing, the screening element is adapted to provide a sense of security and safety for poultry located in the laying nest. It will however be apparent that the screening element preferably docs not create an obstacle to the poultry entering the laying nests. To this end the screening element will preferably only partially screen the entrance of the housing in the accessible position of the laying nest.

The screening element is preferably adapted to attract poultry. In this way the poultry can be lured in the direction of the laying nests in order to lay one or more eggs there, whereby the number of (non-centrally positioned) out-of-nest eggs can be limited to a minimum. In order to provide the screening element with a character attractive to the poultry, a colour attractive to the poultry (in practice usually red and yellow) is chosen.

In order to allow pivoting of the floor element, the floor element is preferably provided with a pivot shaft. The pivot shaft is herein connected to a part of the floor element in the vicinity of the entrance, in order to make a top side or contact side of the floor element accessible to the poultry in upward orientation. In a particular preferred embodiment the position of the pivot shaft can be changed, particularly in vertical direction. The floor element can be displaced integrally by changing the position of the pivot shaft, which can to some extent force driving out of the laying nest of eggs which may have remained behind. The pivot shaft is preferably first lifted in order to drive out of the laying nest eggs which have remained behind in the laying nest, whereafter the floor element can be pivoted in upward direction to allow the floor element to be picked clean by the poultry. The pivot shaft will in practice generally be lifted, whereafter it is released in order to be able to realize a certain jolting of the floor element, whereby eggs located in the laying nest can in any case be driven out of the laying nest. Such a vertical displacement of the pivot shaft of the floor element can occur several times, whereafter the pivot shaft will generally be placed in the usual (lowest) position to allow subsequent pivoting of the floor element. In order to enable displacement of the pivot shaft, the pivot shaft is preferably coupled to one or more displacing members adapted for co-action with the drive means for the purpose of realizing the intended displacement, in particular substantially vertical displacement, of the pivot shaft

In order to enable eggs laid in the laying nest to be discharged via for instance a conveyor belt, the floor element preferably encloses an angle with the horizontal in the accessible position of the laying nest, wherein a part of the floor element remote from the entrance is lower-lying than a part in the vicinity of the entrance. The angle of inclination of the floor element relative to a horizontal plane will generally amount here to several degrees. Eggs nevertheless possibly remaining behind in the laying nest can still be removed from the laying nest by means of lifting the pivot shaft, as described in the foregoing. The floor element is preferably provided herein with a lateral bounding means which is formed such that eggs will not be positioned against a side wall of the laying nest, as a result of which removal of the eggs from the laying nest made more difficult as a consequence of an increased friction can be prevented. Such a bounding means can for instance take a chamfered form here. In preference however (both) laterally positioned longitudinal edges of the floor element will be given an upward sloping form in order to be able to force the eggs back in the direction of a central part of the laying nest

The floor element can be of very diverse nature, but should preferably comprise a top layer which is comfortable for the poultry. The top layer can herein be formed for instance by artificial grass, preferably green artificial grass. The green colour of the top layer generally makes the stay of the poultry in the laying nest more pleasant. The floor element preferably comprises a support structure for the poultry, and comprises a collecting container for fouling residues and the like positioned under the support structure in the accessible position of the laying nest The support structure, of which the top layer forms part, is herein usually permeable for fouling residues such as faeces, sand, dust, feathers and the like, which can be collected by the collecting container. The collecting container is also generally referred to here as dust drawer. Relatively small fouling residues can in this way already be removed from the support structure in the laying nest, which combats fouling of the laying nest. The collecting container can be emptied periodically. The collecting container is preferably provided for this purpose with an outlet inaccessible to the poultry. The collecting container will generally be coupled substantially rigidly to the support structure, whereby during pivoting of the support structure the collecting container will likewise pivot. By pivoting the floor element in upward direction in this way the fouling collected by the collecting container can be displaced out of the collecting container. The fouling removed from the collecting container is preferably received and discharged separately in order to prevent contamination of a free-range area in front-of the laying nest.

The invention also relates to a device for keeping poultry, comprising at least one laying nest according to the invention, and a conveyor belt for eggs coming from the poultry which is positioned on a side of the laying nest remote from the entrance to the laying nest. Use of the conveyor belt can herein be optional. Such a device can also be referred to as a poultry house.

In a preferred variant the laying nest connects to the conveyor belt via a displaceable barrier which connects to the conveyor belt and which, in a situation where the floor element connects to the conveyor belt, is placed such that it allows the eggs to pass freely and, in a situation where the floor element does not connects to the conveyor belt, prevents the eggs on the conveyor belt from being displaced to a laying nest. Such a barrier prevents eggs rolling back from the conveyor belt to a laying nest while the floor element is being pivoted. This prevents eggs falling downward between the conveyor belt and the floor part. The barrier can be operated in simple manner with the floor element and a bias which urges the barrier upward. When the floor part is folded away to the inaccessible position, the bias urges the barrier into the blocking position, and when the floor part is once again in the accessible position the floor part presses the barrier into the position allowing passage.

The invention further relates to a method for keeping poultry in a laying nest according to the invention, comprising the steps of: A) making the laying nest accessible by positioning the floor element in a downward position and causing the screening element to at least partially screen the entrance to the laying nest, B) pivoting in upward direction a part of the floor element remote from the entrance after a period of time following step A), whereby the entrance to the laying nest is blocked, and C) displacing the screening element to a position substantially at a distance from the entrance after a period of time following step A), whereby the entrance is left substantially clear by the screening element. Steps B) and C) can herein be performed simultaneously. The method preferably also comprises step D) comprising of lifting a pivot shaft of the floor element after a period of time following step A) and further releasing the pivot shaft. Such an operation as according to step D) can optionally be repeated several times, and is specifically adapted to drive eggs possibly left behind out of the laying nest in forced manner. In a preferred embodiment step D) is performed before step B) and step C) are performed in order to enable egg production to be maximized. Steps A) to C) are preferably performed repeatedly a period of time after completion of step B) and step C). A self-repeating process thus occurs of allowing the poultry to lay eggs in the laying nest and having the poultry pick clean the floor element of each laying nest. The displacement of the screening element preferably takes place during step C) by winding up the screening element. It is also possible to envisage displacing the screening element, or at least a part thereof, in other manner, for instance by folding up or lifting the screening element or at least a part thereof.

The invention will be elucidated on the basis of non-limitativc exemplary embodiments shown in the following figures. Herein:
figure 1 is a perspective front view of a laying nest according to the invention in a situation accessible to poultry,
figure 2 is a perspective detail view of the laying nest according to figure 1,
figure 3 is a perspective rear view of the laying nest according to figures 1 and 2,
figure 4a is a perspective rear view of the laying nest according to figures 1-3 in an intermediate position, and
figure 4b is a perspective front view of the laying nest according to figures 1-3 in a position inaccessible for poultry.

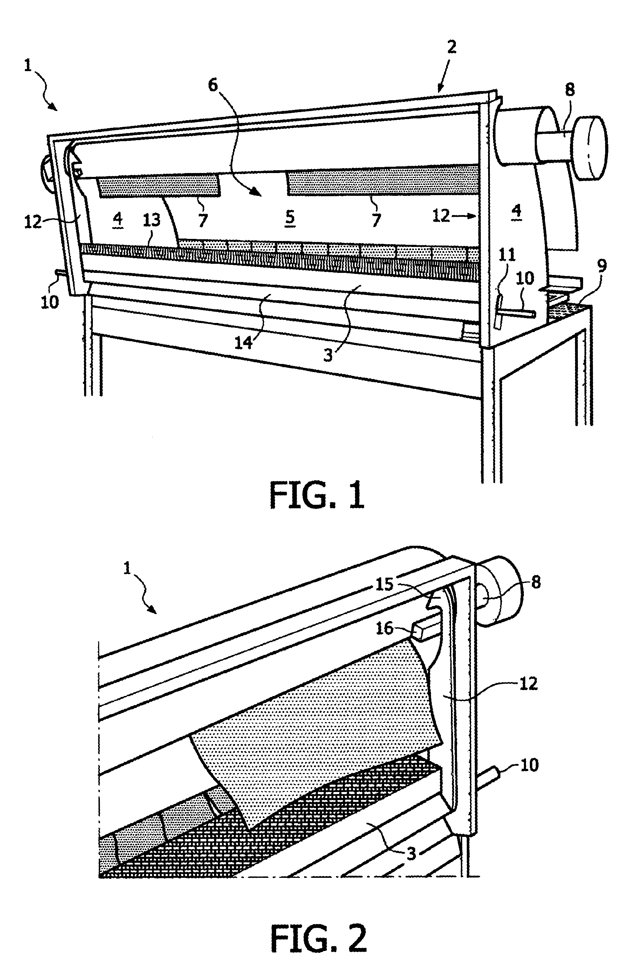

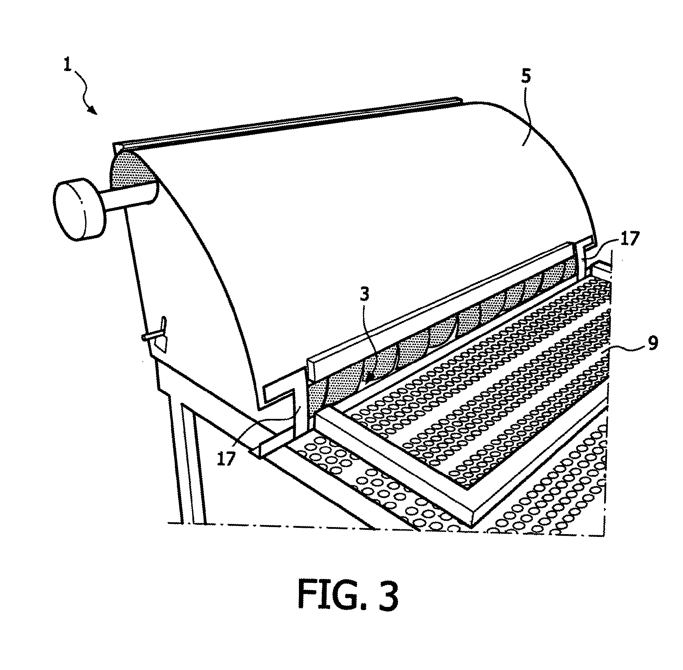

Figure 1 shows a perspective front view of a laying nest 1 according to the invention in a position accessible for poultry. Laying nest 1 comprises a housing 2, which housing comprises a floor element 3, two side walls 4 in substantially parallel orientation and a flexible rear wall 5 connected to floor element 3. Floor element 3, side walls 4 and rear wall 5 herein enclose an entrance 6 for the poultry. The flexible rear wall 5 is preferably manufactured from plastic, in particular polypropylene, but it must have sufficient stiffness to be able to prevent collapse of rear wall 5. Entrance 6 is partially screened by two flexible screening flaps 7. Both rear wall 5 and screening flaps 7 are herein suspended from an axially rotatable shaft 8. Floor element 3 slopes downward in a direction away from entrance 6 in order to be able to drive eggs laid in the laying nest in the direction of a conveyor belt 9 positioned behind laying nest 1. Conveyor belt 9 is shown more clearly in figure 3. Floor element 3 is pivotable about a pivot shaft 10 located close to a plane defined by entrance 6. Pivot shaft 10 is herein received on two sides in slotted holes 11 arranged in side walls 4. Pivot shaft 10 is coupled to two displacing members 12, which displacing members 12 are adapted for co-action with rotatable shaft 8 for the purpose of being able to displace pivot shaft 10 within a limit imposed by slotted holes 11. Floor element 3 is constructed from a support structure 13 for poultry and an underlying collecting tray 14 for fouling residues which is inaccessible to the poultry. Support structure 13 is herein formed by a perforated mat formed by artificial grass. During the use of laying nest 1 the poultry will be attracted to laying nest 1 by screening flaps 7 and thereby take up position in laying nest 1. Screening flaps 7 herein also provide a certain security for poultry located in laying nest 1. In laying nest 1 the poultry can lay eggs which, after laying, will generally roll in the direction of conveyor belt 9. After a determined period of time the shaft 8 will begin to rotate in a direction such that displacing members 12, and thereby pivot shaft 10, are lifted by shaft 8, whereafter displacing members 12 are uncoupled from shaft 8, which results in pivot shaft 10 being moved downward. The above stated operation can be repeated several times to enable eggs which may have been left behind to be removed from laying nest 1 by means of jolting. After a usually predefined period of time shaft 8 will be rotated in opposite direction, whereby both screening flaps 7 and flexible rear wall 5 are rolled up around shaft 8, which results in upward pivoting of floor element 3 as shown in figures 2 and 3. Floor element 3 is herein pivoted from a substantially horizontal, at least lying position to a substantially vertical, at least standing position. In the standing position of floor element 3 floor element 3 closes the entrance 6 of laying nest 1, wherein the poultry can pick the (fouled) floor element 3 relatively clean in effective manner.

Figure 2 shows a perspective detail view of laying nest 1 according to figure 1. This figure shows particularly that the displacing member 12 coupled to floor element 3 has a hook-like outer end 15 which is adapted for co-action with a protrusion 16 mounted on rotatable shaft 8. In the case shaft 8 is rotated in one direction, displacing member 12 will be co-displaced by protrusion 16, which results in lifting of pivot shaft 10 of floor element 3.

Figure 3 shows a perspective rear view of laying nest 1 according to figures 1 and 2. As shown here, the flexible rear wall 5 is interrupted close to conveyor belt 9 in order to allow exit of eggs from laying nest 1 to take place unimpeded. Conveyor belt 9 is formed here by an endless conveyor, wherein the conveyor takes a perforated form to allow passage of possible fouling residues. Flexible rear wall 5 is fastened to floor element 3 by means of two strips 17.

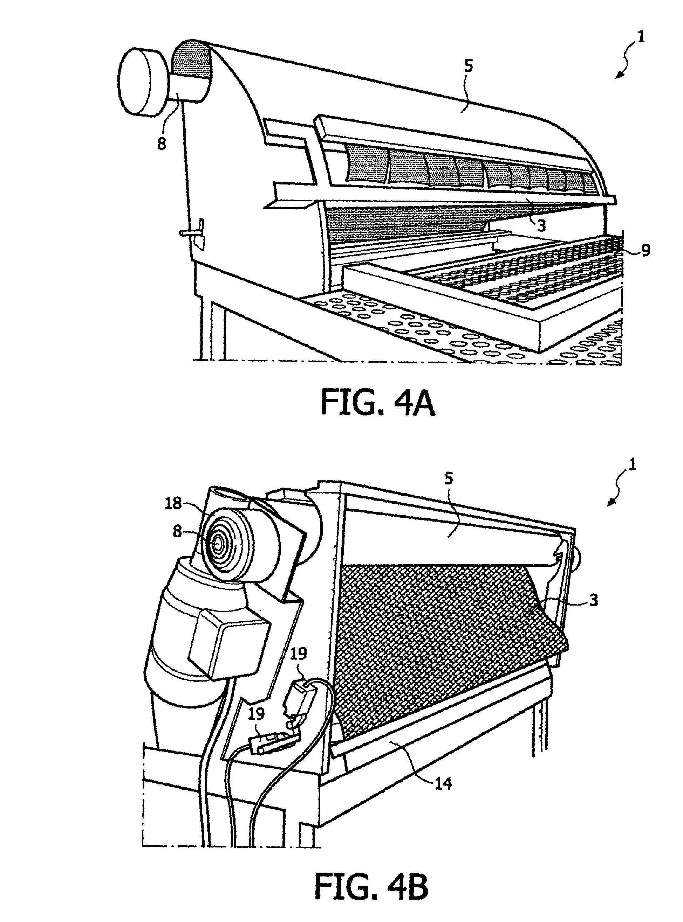

Figure 4a shows a perspective rear view of laying nest 1 according to figures 1-3 in an intermediate situation. In the shown intermediate situation a part of the flexible rear wall 5 is rolled up around the axially rotatable shaft 8, whereby floor element 3 is pivoted in upward direction. Poultry possibly still present in laying nest 1 will in this way be urged out of laying nest 1.

Figure 4b shows a perspective front view of laying nest 1 according to figures 1-3 in a situation inaccessible to poultry. In the shown situation the flexible rear wall 5 is rolled up substantially fully around the axially rotatable shaft 8. Screening flaps 7 are likewise wound up around the axially rotatable shaft 8 and therefore no longer visible, in order to provide the poultry maximum access to floor element 3 situated in the standing position. It has been found that the poultry will pick at floor element 3 in the shown position, whereby the floor element can be cleaned in natural and relatively efficient manner. After a determined period of time floor element 3 can once again be displaced to the position shown in figure 1, whereby laying nest 1 is once again made accessible to the poultry. Figure 4b also shows the electric motor 18 connected to the shaft 8 for causing rotation of the shaft. In the shown situation the collecting tray 14 of floor element 3 can also be emptied, wherein the fouling residues coming from floor element 3 are preferably collected and disposed of separately. In the case a plurality of laying nests 1 are positioned adjacently of each other as assembly, use can be made for the assembly of a single rotatable shaft 8 driven by a single electric motor 18. Electric motor 18 is coupled electrically to a plurality of switches 19 in order to allow electric motor 18 to be switched off in good time. As alternative to the switches, it is also possible to integrate an electronic control, for instance provided with tachometers and/or encoders, with electric motor 18. Electric motor 18 will generally be controlled by a control unit (not shown). The control unit will be generally provided here with a time switch to enable periodic displacement of floor element 3.

It will be apparent that the invention is not limited to the exemplary embodiments shown and described here, but that within the scope of the appended claims numerous variants are possible which will be self-evident to the skilled person in the field.

## Claims

1. Laying nest for poultry, comprising:
- a housing for the poultry, which housing comprises:
- an entrance for the poultry,
- at least one at least partially flexible screening element adapted to enable at least partial screening of the entrance, and
- at least one pivotable floor element; and
- drive means coupled to the housing for displacing the screening element and for pivoting the floor element between an accessible position, in which the screening element at least partially screens the entrance and the floor element is adapted to support poultry present in the laying nest, and an inaccessible position in which the screening element leaves the entrance substantially clear and the floor element substantially closes the entrance.

2. Laying nest as claimed in claim 1, **characterized in that** the drive means comprise at least one axially rotatable shaft for winding up at least a part of the screening element.

3. Laying nest as claimed in claim 1 or 2, **characterized in that** the drive means comprise at least one axially rotatable shaft for winding up lifting means connected to the floor element.

4. Laying nest as claimed in claim 3, **characterized in that** the axially rotatable shaft is positioned in, or at least close to, a plane defined by the entrance.

5. Laying nest as claimed in claim 3 or 4, **characterized in that** the lifting means comprise at least one cord.

6. Laying nest as claimed in any of the claims 3-5, **characterized in that** the lifting means comprise a flexible rear wall of the housing.

7. Laying nest as claimed in claim 6, **characterized in that** a passage for eggs formed between the floor element and the rear wall has a substantially constant size in any situation of the laying nest.

8. Laying nest as claimed in claim 7, **characterized in that** the passage for eggs is positioned on a side of the laying nest remote from the entrance.

9. Laying nest as claimed in any of the foregoing claims, **characterized in that** the screening element is adapted to attract poultry.

10. Laying nest as claimed in any of the foregoing claims, **characterized in that** the floor element is provided with a pivot shaft, which pivot shaft is connected to a part of the floor element in the vicinity of the entrance.

11. Laying nest as claimed in claim 10, **characterized in that** the position of the pivot shaft can be changed.

12. Laying nest as claimed in claim 11, **characterized in that** the pivot shaft is coupled to a displacing member adapted for co-action with the drive means.

13. Laying nest as claimed in any of the foregoing claims, **characterized in that** the floor element encloses an angle with the horizontal in the accessible position of the laying nest, wherein a part of the floor element remote from the entrance is lower-lying than a part in the vicinity of the entrance.

14. Laying nest as claimed in any of the foregoing claims, **characterized in that** the floor element comprises a support structure for the poultry, and a collecting container for fouling residues and the like positioned under the support structure in the accessible position of the laying nest

15. Laying nest as claimed in claim 14, **characterized in that** the collecting container is provided with an outlet inaccessible to the poultry.

16. Device for keeping poultry, comprising at least one laying nest as claimed in any of the claims 1-15, and a conveyor belt for eggs coming from the poultry which is positioned on a side of the laying nest remote from the entrance to the laying nest.

17. Device as claimed in claim 16, **characterized in that** the laying nest connects to the conveyor belt via a displaceable barrier which connects to the conveyor belt and which, in a situation where the floor element connects to the conveyor belt, is placed such that it allows the eggs to pass freely and, in a situation where the floor element connects to the conveyor belt, prevents the eggs on the conveyor belt from being displaced to a laying nest.

18. Method for keeping poultry in a laying nest as claimed in any of the claims 1-15, comprising the steps of:
A) making the laying nest accessible by positioning the floor element in a downward position and causing the at least partly flexible screening element to at least partially screen the entrance to the laying nest,
B) pivoting in upward direction a part of the floor element remote from the entrance after a period of time following step A), whereby the entrance to the laying nest is blocked, and
C) displacing the screening element to a position substantially at a distance from the entrance after a period of time following step A), whereby the entrance is left substantially clear by the screening element.

19. Method as claimed in claim 18, **characterized in that** the method also comprises step D) comprising of lifting a pivot shaft of the floor element after a period of time following step A) and further releasing the pivot shaft.

20. Method as claimed in claim 19, **characterized in that** step D) is performed before step B) and step C) are performed.

21. Method as claimed in any of the claims 18-20, **characterized in that** steps A) - C) are performed repeatedly a period of time after completion of step B) and step C).

22. Method as claimed in any of the claims 18-21, **characterized in that** displacement of the screening element takes place during step C) by winding up the screening element

## Patentansprüche

1. Legenest für Geflügel, das umfasst:
- eine Behausung für das Geflügel, welche Behausung umfasst:
- einen Zugang für das Geflügel,
- mindestens ein, zumindest teilweise biegsames Trennelement, das zur mindestens teilweisen Abtrennung des Zugangs ausgelegt ist, und
- mindestens ein schwenkbares Bodenelement; und
- an die Behausung gekoppelte Antriebsmittel zur Verschiebung des Trennelements, und zum Schwenken des Bodenelements zwischen einer Zugang gewährenden Position, in der das Trennelement zumindest teilweise den Zugang abtrennt und das Bodenelement angepasst ist, Geflügel, das sich in dem Legenest befindet, zu tragen, und einer unzugänglichen Position, in der das Trennelement den Zugang im Wesentlichen frei lässt und das Bodenelement den Zugang im Wesentlichen abschließt.

2. Legenest nach Anspruch 1, **dadurch gekennzeichnet, dass** die Antriebsmittel mindestens eine um ihre Achse drehbare Welle umfassen zum zumindest teilweisen Aufwickeln des Trennelements.

3. Legenest nach Anspruch 1 oder 2, **dadurch gekennzeichnet, dass** die Antriebsmittel mindestens eine um ihre Achse drehbare Welle umfassen zum Aufwickeln von mit dem Bodenelement verbundenen Hebemitteln.

4. Legenest nach Anspruch 3, **dadurch gekennzeichnet, dass** die um ihre Achse drehbare Welle in oder zumindest in der Nähe einer Ebene positioniert ist, die durch den Zugang festgelegt ist.

5. Legenest nach Anspruch 3 oder 4, **dadurch gekennzeichnet, dass** die Hebemittel zumindest ein Seil umfassen.

6. Legenest nach einem der Ansprüche 3-5, **dadurch gekennzeichnet, dass** die Hebemittel eine biegsame Rückwand von der Behausung umfassen.

7. Legenest nach Anspruch 6, **dadurch gekennzeichnet, dass** ein Durchlass für Eier, der zwischen dem Bodenelement und der Rückwand gebildet wird, in jeder Situation des Legenests eine im Wesentlichen konstante Größe hat.

8. Legenest nach Anspruch 7, **dadurch gekennzeichnet, dass** der Durchlass für Eier an einer Seite des Legenests liegt, die entfernt vom Zugang ist.

9. Legenest nach einem der vorhergehenden Ansprüche, **dadurch gekennzeichnet, dass** das Trennelement ausgelegt ist, um Geflügel anzuziehen.

10. Legenest nach einem der vorhergehenden Ansprüche, **dadurch gekennzeichnet, dass** das Bodenelement mit einer drehbar gelagerten Achse ausgestattet ist, welche Drehachse mit einem Teil des Bodenelements in der Nähe des Zugangs verbunden ist.

11. Legenest nach Anspruch 10, **dadurch gekennzeichnet, dass** die Position der Drehachse verändert werden kann.

12. Legenest nach Anspruch 11, **dadurch gekennzeichnet, dass** die Drehachse mit einem Verschiebeglied gekoppelt ist, das für eine Zusammenarbeit mit den Antriebsmitteln ausgelegt ist.

13. Legenest nach einem der vorhergehenden Ansprüche, **dadurch gekennzeichnet, dass** das Bodenelement mit der Waagerechten in der Zugangsposition des Legenests einen Winkel einschließt, worin ein vom Zugang entfernt liegender Teil des Bodenelements niedriger liegt als ein in der Nähe des Zugangs liegender Teil.

14. Legenest nach einem der vorhergehenden Ansprüche, **dadurch gekennzeichnet, dass** das Bodenelement einen Trageaufbau für das Geflügel umfasst sowie einen Sammelbehälter für Verschmutzungsrückstände und dergleichen, der sich unterhalb des Trageaufbaus in der Zugangsposition des Legenests befindet.

15. Legenest nach Anspruch 14, **dadurch gekennzeichnet, dass** der Sammelbehälter mit einem Auslass versehen ist, der für das Geflügel unzugänglich ist.

16. Vorrichtung zum Halten von Geflügel, die mindestens ein Legenest nach einem der Ansprüche 1-15 umfasst und ein Förderband, das sich an einer vom Zugang zu dem Legenest entfernt liegenden Seite des Legenests befindet, für Eier, die von dem Geflügel stammen.

17. Vorrichtung nach Anspruch 16, **dadurch gekennzeichnet, dass** das Legenest mit dem Förderband über eine verschiebbare Barriere verbunden ist, die mit dem Förderband verbunden ist, und die in einer Situation, wo das Bodenelement mit dem Förderband verbunden ist, so angeordnet ist, dass es den Eiern ermöglicht, frei zu passieren, und in einer Situation, wo das Bodenelement mit dem Förderband verbunden ist, verhindert, dass die Eier auf dem Förderband zu einem Legenest verlagert werden.

18. Verfahren zum Halten von Geflügel in einem Legenest nach einem der Ansprüche 1-15, das die Schritte umfasst:
A) Ermöglichen des Zugangs zum Legenest durch das Bodenelement in eine nach unten gerichtete Position zu bringen und zu bewirken, dass das zumindest teilweise biegsame Trennelement zumindest teilweise den Zugang zum Legenest abdeckt,
B) einen Teil des Bodenelements, der entfernt vom Zugang liegt, nach oben Schwenken, nach einer Zeitspanne im Anschluss an Schritt A), wobei der Zugang zu dem Legenest blockiert ist, und
C) Verschieben des Trennelements in eine Position, die sich im Wesentlichen in einem Abstand vom Zugang befindet, nach einer auf Schritt A) folgenden Zeitspanne, wobei der Zugang durch das Trennelement im Wesentlichen frei bleibt.

19. Verfahren nach Anspruch 18, **dadurch gekennzeichnet, dass** das Verfahren auch einen Schritt D) umfasst, der das Anheben einer zum Bodenelement gehörenden Drehachse nach Verlauf einiger Zeit im Anschluss an Schritt A) umfasst und ferner eine Freigabe der Drehachse.

20. Verfahren nach Anspruch 19, **dadurch gekennzeichnet, dass** der Schritt D) vor dem Schritt B) und Schritt C) durchgeführt wird.

21. Verfahren nach einem der Ansprüche 18-20, **dadurch gekennzeichnet, dass** die Schritte A) - C) nach der Vollendung von Schritt B) und Schritt C) mehrmals wiederholt durchgeführt werden.

22. Verfahren nach einem der Ansprüche 18-21, **dadurch gekennzeichnet, dass** die Verschiebung des Trennelements während Schritt C) durch Aufwickeln des Trennelements erfolgt.

## Revendications

1. Pondoir pour volaille, comprenant :
- un logement pour la volaille, lequel logement comprend :
- une entrée pour la volaille ;
- au moins un élément de masquage au moins partiellement flexible adapté pour permettre un masquage au moins partiel de l'entrée, et
- au moins un élément formant sol pivotant, et
- des moyens d'actionnement couplés au logement pour déplacer l'élément de masquage et pour faire pivoter l'élément formant sol entre une position accessible dans laquelle l'élément de masquage dissimule au moins partiellement l'entrée et l'élément formant sol est adapté pour supporter la volaille présente dans le pondoir, et une position inaccessible dans laquelle l'élément de masquage laisse l'entrée sensiblement libre et l'élément formant sol ferme sensiblement l'entrée.

2. Pondoir selon la revendication 1, **caractérisé en ce que** les moyens d'actionnement comprennent au moins un arbre axialement rotatif pour enrouler au moins une partie de l'élément de masquage.

3. Pondoir selon la revendication 1 ou 2, **caractérisé en ce que** les moyens d'actionnement comprennent au moins un arbre axialement rotatif pour enrouler des moyens de levage reliés à l'élément formant sol.

4. Pondoir selon la revendication 3, **caractérisé en ce que** l'arbre axialement rotatif est positionné dans un, ou au moins près d'un, plan défini par l'entrée.

5. Pondoir selon la revendication 3 ou 4, **caractérisé en ce que** les moyens de levage sont constitués d'au moins une corde.

6. Pondoir selon l'une quelconque des revendications 3-5, **caractérisé en ce que** les moyens de levage sont constitués d'une paroi arrière flexible du logement.

7. Pondoir selon la revendication 6, **caractérisé en ce qu'**un passage pour les oeufs ménagé entre l'élément formant sol et la paroi arrière a une taille sensiblement constante dans n'importe quelle situation du pondoir.

8. Pondoir selon la revendication 7, **caractérisé en ce que** le passage pour les oeufs est positionné d'un côté du pondoir éloigné de l'entrée.

9. Pondoir selon l'une quelconque des revendications précédentes, **caractérisé en ce que** l'élément de masquage est adapté pour attirer la volaille.

10. Pondoir selon l'une quelconque des revendications précédentes, **caractérisé en ce que** l'élément de sol est pourvu d'un arbre de pivot, lequel arbre de pivot est relié à une partie de l'élément formant sol à proximité de l'entrée.

11. Pondoir selon la revendication 10, **caractérisé en ce que** la position de l'arbre de pivot peut être changée.

12. Pondoir selon la revendication 11, **caractérisé en ce que** l'arbre de pivot est couplé à un organe mobile adapté pour agir conjointement avec les moyens d'actionnement.

13. Pondoir selon l'une quelconque des revendications précédentes, **caractérisé en ce que** l'élément formant sol fait un angle avec l'horizontale dans la position accessible du pondoir, une partie de l'élément formant sol éloignée de l'entrée étant plus bas qu'une partie à proximité de l'entrée.

14. Pondoir selon l'une quelconque des revendications précédentes, **caractérisé en ce que** l'élément formant sol est constitué d'une structure de support pour la volaille et d'un récipient collecteur pour les résidus salissants et analogues positionné sous la structure de support dans la position accessible du pondoir.

15. Pondoir selon la revendication 14, **caractérisé en ce que** le récipient collecteur est pourvu d'une sortie inaccessible à la volaille.

16. Dispositif d'élevage de volaille, comprenant au moins un pondoir selon l'une quelconque des revendications 1-15, et une bande transporteuse pour les oeufs provenant de la volaille qui est positionnée d'un côté du pondoir éloigné de l'entrée du pondoir.

17. Dispositif selon la revendication 16, **caractérisé en ce que** le pondoir est raccordé à la bande transporteuse par une barrière déplaçable qui est raccordée à la bande transporteuse et qui, dans une situation où l'élément formant sol est raccordé à la bande transporteuse, est placée de telle sorte qu'elle permet aux oeufs de passer librement et, dans une situation où l'élément formant sol est raccordé à la bande transporteuse, empêche les oeufs sur la bande transporteuse d'être déplacés vers un pondoir.

18. Procédé d'élevage de volaille dans un pondoir selon l'une quelconque des revendications 1-15, comprenant les étapes consistant :
A) à rendre le pondoir accessible en positionnant l'élément formant sol dans une position abaissée et en faisant en sorte que l'élément de masquage au moins partiellement flexible masque au moins partiellement l'entrée du pondoir ;
B) à faire pivoter vers le haut une partie de l'élément formant sol éloignée de l'entrée après un laps de temps suivant l'étape A) de telle sorte que l'entrée du pondoir soit bloquée, et
C) à déplacer l'élément de masquage vers une position sensiblement éloignée de l'entrée après un laps de temps suivant l'étape A) de telle sorte que l'entrée soit laissée sensiblement libre par l'élément de masquage.

19. Procédé selon la revendication 18, **caractérisé en ce que** le procédé comprend aussi l'étape D) consistant à lever un arbre de pivot de l'élément formant sol après un laps de temps suivant l'étape A) et à relâcher ensuite l'arbre de pivot.

20. Procédé selon la revendication 19, **caractérisé en ce que** l'étape D) est exécutée avant que l'étape B) et l'étape C) ne soient exécutées.

21. Procédé selon l'une quelconque des revendications 18-20, **caractérisé en ce que** les étapes A)-C) sont exécutées de manière répétée un laps de temps après l'achèvement de l'étape B) et de l'étape C).

22. Procédé selon l'une quelconque des revendications 18-21, **caractérisé en ce que** le déplacement de l'élément de masquage a lieu durant l'étape C) par enroulement de l'élément de masquage.
